# EUROPEAN PATENT SPECIFICATION

(11) **EP 2 088 124 B1**
(45) Date of publication and mention of the grant of the patent: **12.09.2018**
(21) Application number: 07830646.1
(22) Date of filing: 26.10.2007
(51) Int. Cl.: C01B 33/107

(54) **PROCESS FOR PRODUCING TRICHLOROSILANE**
VERFAHREN ZUR HERSTELLUNG VON TRICHLORSILAN
PROCÉDÉ DE PRODUCTION DE TRICHLOROSILANE

(30) Priority: 30.11.2006 JP 2006323097; 22.10.2007 JP 2007273547
(43) Date of publication of application: 12.08.2009
(73) Proprietor: Mitsubishi Materials Corporation, Tokyo 100-8117 (JP)
(72) Inventor: MIZUSHIMA, Kazuki, Naka-shi Ibaraki 311-0102 (JP); SHIMIZU, Yuji, Naka-shi Ibaraki 311-0102 (JP)
(74) Representative: Cabinet Plasseraud
(86) International application number: PCT/JP2007/070912
(87) International publication number: WO 2008/065838

(56) References cited:
- WO-A2-2006/081980
- DE-A1- 3 024 319
- JP-A- 57 017 415
- JP-A- 60 081 010
- JP-A- 60 081 010
- JP-A- 62 021 707
- JP-A- 62 021 707
- US-A- 4 165 363
- US-A- 5 906 799

## Description

### TECHNICAL FIELD

The present invention relates to a method for producing trichlorosilane by converting silicon tetrachloride to trichlorosilane by a reaction of silicon tetrachloride and hydrogen. Priority is claimed on Japanese Patent Application No. 2006-323097 filed on November 30, 2006, and Japanese Patent Application No. 2007-273547 filed on October 22, 2007.

### BACKGROUND ART

Polycrystalline silicon of high purity may be produced, for example, using trichlorosilane (SiHCl₃:TCS), silicon tetrachloride (SiCl₄: STC), and hydrogen as raw materials, by hydrogen reduction of trichlorosilane shown by the below-described formula (1) and thermolysis of trichlorosilane shown by the below-described formula (2).

SiHCl₃+H₂→Si+3HCl ..... (1)

4SiHCl₃→Si+3SiCl₄+2H₂ ... (2)

Trichlorosilane as a raw material of the above-described production method is obtained by producing raw trichlorosilane by a reaction of metallic silicon and hydrogen chloride, and distilling the raw trichlorosilane. In addition, silicon tetrachloride extracted by fractional distillation of exhaust gas from the above-described production reaction may be used as a raw material for producing trichlorosilane by hydrogenation conversion shown by the below-described formula (3).

SiCl₄+H₂→SiHCl₃+HCl .... (3)

A conversion reaction apparatus (conversion furnace), for example, described in Patent Document 1 is known as an apparatus for producing trichlorosilane. In this conversion reaction apparatus, a reaction chamber surrounded by a heating element has a dual chamber structure having an outer chamber and an inner chamber constituted of two tubes in a concentric alignment. A heat exchanger is disposed below the reaction chamber. A raw gas supply passage for supplying hydrogen and silicon tetrachloride through the heat exchanger to the reaction chamber and an exhaustion pipeline passage for exhausting the reaction product gas from the reaction chamber are connected to the heat exchanger. Thus, the apparatus is constituted such that the supply gas to be supplied to the reaction chamber is preheated in the heat exchanger while cooling the exhausted reaction product gas by heat conduction to the supply gas from the reaction product gas being exhausted from the reaction chamber.

As another example, Patent Document 2 proposes an apparatus in which a reaction product gas containing trichlorosilane and hydrogen chloride is obtained by introducing silicon tetrachloride and hydrogen into a reaction chamber and subjecting them to a conversion reaction at a temperature of 600°C to 1200°C, and the reaction product gas is cooled at a rapid cooling rate (quenching rate) by a cooling device provided to the apparatus such that the reaction product gas is cooled to a temperature of not higher than 300°C within 1 second or shorter.
Patent Document 1: Japanese Patent No. 3781439.
Patent Document 2: Japanese Examined Patent Application, Second Publication No. S57-38524.

### DISCLOSURE OF THE INVENTION

In the apparatus for producing trichlorosilane described in Patent Document 1, the reaction product gas is cooled by heat exchange with the supplied raw gas in the heat exchanger disposed below the reaction chamber. On the other hand, a reverse reaction of the above-described reaction formula (3) to decompose trichlorosilane, by reaction with hydrogen chloride, to silicon tetrachloride (STC) and hydrogen occurs during the cooling process of the reaction product gas. In the conventional cooling using a heat exchanger, there is a disadvantage in that it is impossible to sufficiently suppress the occurrence of the above-described reverse reaction because of a slow cooling rate, resulting in a low conversion ratio to trichlorosilane. This disadvantage was prominent when the conversion reaction was exerted at relatively high temperature, especially remarkable at a temperature exceeding 1200°C.

As described in Patent Document 2, the reverse reaction of the above-described reaction formula (3) may be suppressed by rapid cooling (quenching) within an extremely short time of not longer than 1 second to 300°C or lower at which the above-described reverse reaction scarcely occurs. However, in such a case of rapid cooling, it is known that a polymer is by-produced during the cooling process, for example, by a reaction of SiCl₂ and SiCl₄ in accordance with the below-described reaction formula (4). As shown in the below-described formula (5), the SiCl₂ is an intermediate product generated by a decomposition of trichlorosilane and is generated in a larger amount at a high temperature. Thus, by-production of polymer increases where the conversion reaction occurs at a relatively high temperature, and is especially remarkable at a temperature exceeding 1200°C.

SiCl₂+SiCl₄→Si₂Cl₆ ..... (4)

SiHCl₃→SiCl₂+HCl ..... (5)

Because of the above-described by-production of polymer, there were disadvantages in that the conversion ratio to trichlorosilane was reduced and that the polymer as the by-product blocked the piping by adhesion to the pipe wall and the like, and satisfactory performance of the piping and the like could not be maintained. Here, the above-described polymer is a generic term for a chlorosilane group of a higher order structure having at least two silicon atoms as in the above-described Si2Cl6 and includes Si3Cl8, Si2H2Cl4, and the like.

After the cooling to 300°C or lower, the supply gas cannot be sufficiently preheated by the exchanger, and the residual heat of the reaction product gas cannot be utilized. Therefore, in this apparatus for producing trichlorosilane, the heat efficiency of the entire apparatus is remarkably reduced because of increased energy loss. In addition, there was a problem of a large increase in production cost of the apparatus for producing trichlorosilane since it was necessary to use a cooling device of a complicated constitution so as to cool the reaction product gas from about 1000°C to 300°C or lower within 1 second or shorter. JPS60 081010 discloses a method of producing tricholosilane in which rapid cooling to <=600 deg C is employed. WO2006/081980 discloses a method of producing tricholosilane in which cooling the product mixture during a retention time of the reaction gas is employed.

The present invention solves the above-described problems in the conventional production methods. An object of the present invention is to provide a method for producing trichlorosilane which enable the heat efficiency and conversion ratio to be enhanced by preheating the above-described silicon tetrachloride and the above-described hydrogen, and optimizing a cooling rate of a reaction product gas by providing a cooling step for cooling the reaction product gas discharged from the reaction chamber, thereby inhibiting the reverse reaction to silicon tetrachloride and by-production of polymer.

In order to solve the above-described problems, a method for producing trichlorosilane according to the present invention is provided in claim 1.

In the method for producing trichlorosilane of the above-described constitution, the reaction product gas is rapidly cooled to 300°C to 800°C. In this case, since the conversion reaction from trichlorosilane to silicon tetrachloride does not occur remarkably at 800°C or lower, it is possible to improve the conversion ratio to trichlorosilane. In addition, since the temperature of the reaction product gas after quenching is not lower than 300°C, it is possible to suppress generation of a polymer during the cooling process, thereby obviating problems such as blockage of piping by the polymer, while further improving the conversion ratio.

In addition, since the temperature of the reaction product gas after quenching is maintained to be not lower than 300°C, and silicon tetrachloride and hydrogen is preheated in the preheating step by performing heat exchange between the reaction product gas and the silicon tetrachloride and hydrogen to be introduced into the reaction chamber, it is possible to preheat the silicon tetrachloride and hydrogen by utilizing residual heat of the reaction product gas, thereby improving thermal efficiency of the entire process in the method for producing trichlorosilane.

Optionally, in the method for producing trichlorosilane according to the present invention, the reaction product gas is produced by a conversion reaction at 1200°C to 1900°C in the conversion reaction step.

Since the conversion reaction is performed at 1200°C to 1900°C in the above-described method for producing trichlorosilane the conversion reaction is further enhanced, and the conversion ratio to trichlorosilane can be improved. Where the temperature exceeds 1200°C, since the trichlorosilane in the reaction product gas partially decomposes to hydrogen chloride and SiCl₂ as an intermediate product, and the SiCl₂ constitutes a main component in the reaction product gas, a polymer tends to be produced. However, in the present invention, since the cooling rate is optimized such that the temperature of the reaction product gas after quenching is maintained to be not lower than 300°C, the generation of polymer is suppressed. Therefore, the conversion reaction may be performed at a high temperature of not lower than 1200°C without causing a problem.

Preferably, in the method for producing trichlorosilane according to the present invention, the reaction product gas is quenched to 300°C to 650°C during the cooling.

In the method for producing trichlorosilane the reaction product gas is cooled to a temperature of not higher than 650°C. Therefore, the reverse reaction of the conversion reaction is further suppressed, and the conversion ratio to trichlorosilane can be improved. In addition, since the cooling temperature is 650°C or lower, it is possible to constitute piping for passing the reaction product gas after cooling, heat exchanger, and the like using stainless steel. Therefore, the production apparatus can be fabricated at low cost. Where the piping, heat exchanger and the like are constituted of stainless steel, there is a possibility of the reaction product gas being contaminated by impurities such as phosphorus (P), boron (B), and arsenic (As) contained in the stainless steel. However, since the temperature of the reaction product gas is not higher than 650°C, it is possible to suppress contamination of the impurities, thereby producing trichlorosilane of high purity.

According to the present invention, the silicon tetrachloride and the hydrogen to be introduced into the reaction chamber is preheated utilizing residual heat of the reaction product gas, and a device is provided for cooling the reaction product discharged from the chamber, optimizing the cooling rate, and inhibiting reverse reaction to silicon tetrachloride and by-production of polymer. Therefore, it is possible to improve heat efficiency and the conversion ratio to trichlorosilane.

### BRIEF DESCRIPTION OF DRAWINGS

FIG. 1 is a drawing explaining an apparatus for producing trichlorosilane.
FIG. 2 is a graph showing a relationship between the cooling temperature of the product gas and conversion ratio to trichlorosilane.
FIG. 3 is a graph showing a relationship between the cooling temperature of the reaction product gas and production ratio of a polymer.

### Explanation of symbols

- 1: An apparatus for producing trichlorosilane.
- 2: Reaction chamber
- 3: Condenser
- 4: Distillation device
- 10: Gas supplying mechanism
- 11A, 11B, 11C: Gas supply pipeline
- 12: Heat exchanger (preheating unit)
- 13: Carbon heater
- 20: Product gas discharging mechanism
- 21A, 21B, 21C: Product gas pipeline
- 22: Cooling device (Cooling unit)
- 23A, 23B: Cooling water pipeline

### BEST MODE FOR CARRYING OUT THE INVENTION

In the following, the method of producing trichlorosilane and an apparatus for producing trichlorosilane are explained with reference to the attached drawings.

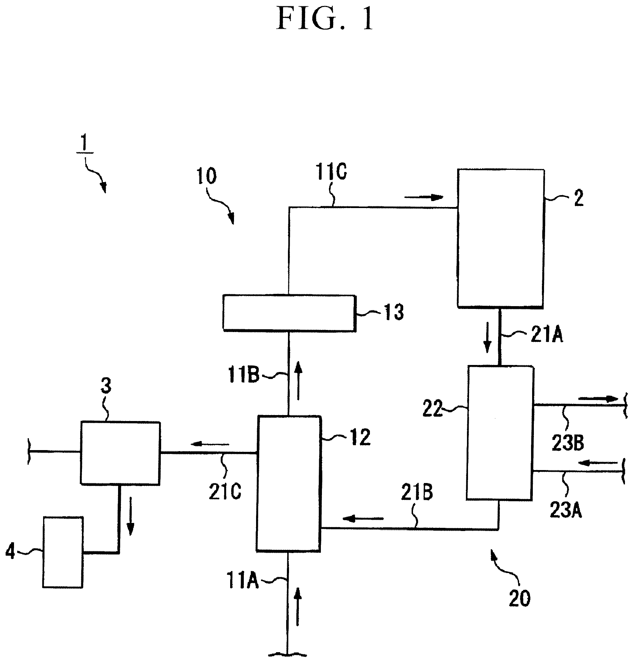

As shown in FIG. 1, an apparatus 1 for producing trichlorosilane comprises: a reaction chamber 2 in which supply gas composed of silicon tetrachloride and hydrogen is introduced to produce a reaction product gas containing trichlorosilane and hydrogen chloride by a conversion reaction; a gas supplying mechanism 10 which is connected to the reaction chamber 2 and supplies the supply gas into the reaction chamber 2; a reaction product gas discharging mechanism 20 which is connected to the reaction chamber 2 and discharges (brings out) the reaction product gas from the interior of the reaction chamber 2 to the outside.

The reaction chamber 2 comprises a heating device (not shown) for heating the silicon tetrachloride and hydrogen introduced into the reaction chamber to 900°C to 1900°C, maintaining the heated state, and thereby producing the above-described reaction product gas by a conversion reaction. Where the interior temperature of the reaction chamber 2 is controlled to be 1200°C to 1900°C, the rate of conversion to trichlorosilane is improved. That is, by the conversion reaction at 1200°C to 1900°C, it is possible to extract (take out, recover) a larger amount of trichlorosilane.

Because of the necessity for heat resistance against the above-described high temperature at 900°C to 1900°C, the reaction chamber 2 is made of carbon, and the surface of the carbon is further coated with silicon carbide (SiC) so as to inhibit deterioration of carbon and to further improve the heat resistance.

The gas supplying mechanism 10 comprises supply gas pipelines 11A, 11B, and 11C for passing therein the supply gas to be introduced into the reaction chamber 2, and a heat exchanger 12 for exchanging heat between the supply gas and the reaction product gas. A carbon heater 13 is disposed on the downstream side (reaction chamber 2 side) of the heat exchanger 12 for further heating the supply gas heated by the heat exchanger 12.

The reaction product gas discharging mechanism 20 comprises reaction product gas pipelines 21A, 21B, 21C for passing therein the reaction product gas discharged from the reaction product gas in the reaction chamber 2, and a cooling device 22 for cooling the reaction product gas discharged from the reaction chamber 2.

The cooling device 22 is a water-cooling type device that comprises cooling water pipelines 23A and 23B and cools the reaction product gas by the cooling water, and is designed such that the reaction product gas at 900°C to 1900°C can be quenched to 300°C to 800°C. The cooling device 22 has a constitution such that the reaction product gas can be quenched to 300°C to 650°C. The reaction product gas pipelines 21B and 21C for passing the reaction product gas cooled by the cooling device 22 are constituted of stainless steel.

Next, a method for producing trichlorosilane using the above-described apparatus 1 for producing trichlorosilane is explained.

Firstly, raw gas composed of silicon tetrachloride and hydrogen is introduced through the gas supply pipeline 11A into the heat exchanger 12. At this time, the temperature of the raw gas is approximately about 100°C. In the heat exchanger 12, the raw gas is heated to about 300°C to 800°C by exchanging heat with the reaction product gas at 300°C to 800°C. The thus heated raw gas is introduced through the gas supply pipeline 11B into the carbon heater 13, where the raw gas is heated to about 400 to 800°C. Then, the raw gas is introduced through the gas supply pipeline 11C into the reaction chamber 2.

In the reaction chamber 2, the supplied gas is heated to 900°C to 1900°C by the heating device, and generates the reaction product gas by a conversion reaction. The reaction product gas is introduced through the reaction product gas pipeline 21A to the cooling device 22, then water-cooled in the cooling device 22, and is quenched to 300°C to 800°C, in the present embodiment, 300°C to 650°C. The thus cooled reaction product gas is introduced through the reaction product gas pipeline 21B to the above-described heat exchanger 12 and preheats the supply gas by the residual heat.

The reaction product gas further cooled by the heat exchanger 12 passes through the condenser (cooling vessel) 3 and is introduced to the distillation device 4, where trichlorosilane is separated by distillation.

In the method for producing trichlorosilane the reaction product gas containing trichlorosilane and hydrogen chloride is produced in the reaction chamber 2 by a conversion reaction at 900°C to 1900°C, and the reaction product gas is quenched to 800°C or lower by the cooling device 22. Therefore, it is possible to suppress progress of the reverse reaction to generate silicon tetrachloride by the reaction of trichlorosilane and hydrogen, and it is possible to improve the conversion ratio to trichlorosilane.

In addition, since the cooling rate is controlled such that the temperature of the reaction product gas after quenching is not lower than 300°C, it is possible to suppress by-production of a polymer during the cooling process, thereby preventing problems such as blockage of the piping by the polymer while further improving the conversion ratio.

In addition, since the gas supplying mechanism 10 for introducing the supply gas to the reaction chamber 2 is provided with the heat exchanger 12 for performing heat exchange between the raw gas and the reaction product gas, and the temperature of the reaction product gas after quenching is maintained to be not lower than 300°C, it is possible to preheat the supply gas utilizing the residual heat of the reaction product gas, thereby improving heat efficiencies of the entire process of the method for producing trichlorosilane. In addition, since the supply gas is thus preheated by the heat exchanger 12 and is further heated by the carbon heater 13, it is possible to simplify the heating mechanism in the reaction chamber 2.

In this embodiment, since the conversion reaction occurs at 1200°C to 1900°C in the reaction chamber 2, the conversion reaction is further accelerated, and the rate of conversion to trichlorosilane can be improved. Although a polymer tends to be generated in a high temperature conversion reaction, the generation of a polymer can be inhibited since the cooling rate is controlled in the cooling device 22 such that the temperature of the reaction product gas after cooling is not lower than 300°C.

In addition, by cooling the reaction product gas to 650°C or lower in the cooling device 22, the reverse reaction of the conversion reaction is further suppressed, and the conversion ratio to trichlorosilane can be improved. Stainless steel can be used for making reaction product gas pipelines 21B, 21C for the downstream side of the cooling device 22, and the production apparatus can be constituted at low cost. Further, it is possible to suppress the reaction product gas being contaminated with phosphorous (P), boron (B), arsenic (As) and the like contained in the stainless steel constituting the reaction product gas pipelines 21B and 21C, thereby producing trichlorosilane of high purity.

While the supply gas to be introduced into the reaction chamber is composed of silicon tetrachloride and hydrogen in the above-described embodiment, a disilane group may be contained in the supply gas. In addition, while a mixture of silicon tetrachloride and hydrogen is introduced as the supply gas into the reaction chamber, it is not limiting, and silicon tetrachloride and hydrogen may be individually introduced into the reaction chamber.

While the carbon heater is disposed at the downstream side of the heat exchanger in the above- explained embodiment, it is not necessary to provide the separate heating device. Alternatively, it is possible to provide a heating device other than the carbon heater. While the reaction chamber is explained to be made of carbon and the surface thereof is coated with silicon carbide, the coating of silicon carbide may be omitted. While the temperature of the silicon tetrachloride and hydrogen is explained as 100°C at the time of being introduced to the heat exchanger, the temperature is not limited to this value, and may be set to be an arbitrary temperature. A temperature sensor may be provided in the reaction product gas pipeline connected to the reaction chamber so as to control the cooling device.

### Examples

### Example 1

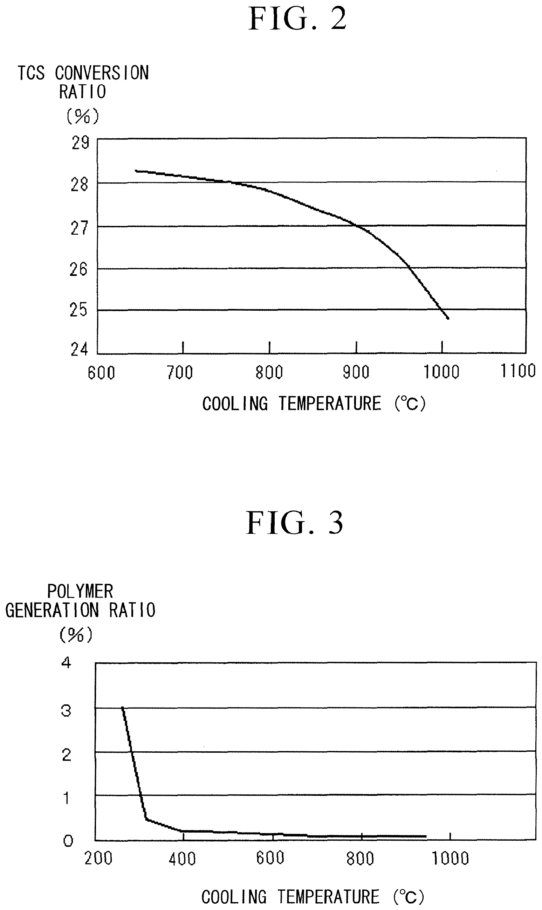

Using the production apparatus shown in FIG. 1, mixed gas produced at a reaction temperature of 1200°C was introduced from the reaction chamber 2 to the cooling device 22 and was cooled. At this time, the relationship between the temperature of the product gas at the outlet of the cooling device and the trichlorosilane conversion ratio is shown in FIG. 2. The trichlorosilane conversion ratio denotes a molar ratio (TCS amount/STC amount: %) of the produced amount of trichlorosilane (TCS amount) to the introduced amount (STC amount) of silicon tetrachloride as a raw material introduced into the reaction chamber 2.

As shown in FIG. 2, where the cooling temperature of the product mixed gas is not lower than 800°C, the conversion ratio to trichlorosilane is largely decreased and is not higher than 28%. On the other hand, where the cooling temperature of the product mixed gas is lower than 800°C, for example, where the cooling temperature is 650°C, the conversion ratio to trichlorosilane is improved to a value of about 28.5%.

### Example 2.

Using the production device shown in FIG. 1, mixed gas produced at a reaction temperature of 1200°C was introduced from the reaction chamber 2 to the cooling device 22 and was cooled. At this time, the relationship between the temperature of the product gas at the outlet of the cooling device and the production ratio of polymer is shown in FIG. 3. The production ratio of a polymer denotes a molar ratio (polymer amount/STC amount: %) of the produced amount of polymer (polymer amount) to the introduced amount (STC amount) of silicon tetrachloride as a raw material introduced into the reaction chamber 2.

As shown in FIG. 3, where the cooling temperature of the product mixed gas is 300°C or lower, the produced amount of polymer steeply increases. Therefore, based on the results shown in FIG. 2 and FIG. 3, it is understood that the proper cooling temperature of the product gas is 300°C to 800°C, and preferably, 300°C to 650°C. Where the cooling temperature of the product gas is in a range of 300°C to 650°C, production of a polymer is largely suppressed and the conversion ratio to trichlorosilane is high.

### INDUSTRIAL APPLICABILITY

According to the present invention, the silicon tetrachloride and hydrogen to be introduced into the reaction chamber are preheated utilizing the residual heat of the reaction product gas, and a reverse reaction to silicon tetrachloride and by-production of a polymer are inhibited by disposing a device for cooling the reaction product gas discharged from the reaction chamber to optimize the cooling rate, it is possible to improve the heat efficiency and conversion ratio to trichlorosilane. Therefore, the present invention is highly useful in industrial applications.

## Claims

1. A method for producing trichlorosilane comprising:
performing a conversion reaction by introducing silicon tetrachloride and hydrogen into a reaction chamber, and producing a reaction product gas containing trichlorosilane and hydrogen chloride by a conversion reaction at 900°C to 1900°C;
performing cooling of the reaction product gas discharged from the reaction chamber by quenching to 300°C to 800°C; and
performing preheating of the silicon tetrachloride and the hydrogen to 300°C to 800°C by heat exchange between the reaction product gas that is maintained to be not lower than 300°C after the quenching and the silicon tetrachloride and the hydrogen to be introduced into the reaction chamber.

2. The method for producing trichlorosilane according to claim 1, wherein the reaction product gas is produced by conversion reaction at 1200°C to 1900°C in the conversion reaction.

3. The method for producing trichlorosilane according to claim 1, wherein the reaction product gas is quenched to 300°C to 650°C in the cooling.

## Patentansprüche

1. Verfahren zur Herstellung von Trichlorsilan, umfassend:
Durchführen einer Umwandlungsreaktion durch Einleiten von Siliciumtetrachlorid und Wasserstoff in eine Reaktionskammer, und Erzeugen eines Trichlorsilan und Chlorwasserstoff enthaltenden Reaktionsproduktgases durch eine Umwandlungsreaktion bei 900 °C bis 1900 °C;
Durchführen des Abkühlens des aus der Reaktionskammer abgeführten Reaktionsproduktgases durch rasches Abkühlen auf 300 °C bis 800 °C; und
Durchführen des Vorwärmens des Siliciumtetrachlorids und des Wasserstoffs auf 300 °C bis 800 °C durch Wärmeaustausch zwischen dem Reaktionsproduktgas, das so gehalten wird, dass es nach dem raschen Abkühlen nicht unter 300 °C ist, und dem Siliciumtetrachlorid und dem Wasserstoff, die in die Reaktionskammer eingeleitet werden sollen.

2. Verfahren zur Herstellung von Trichlorsilan nach Anspruch 1, wobei das Reaktionsproduktgas durch eine Umwandlungsreaktion bei 1200 °C bis 1900 °C in der Umwandlungsreaktion erzeugt wird.

3. Verfahren zur Herstellung von Trichlorsilan nach Anspruch 1, wobei das Reaktionsproduktgas bei dem Abkühlen rasch auf 300 °C bis 650 °C abgekühlt wird.

## Revendications

1. Procédé de production de trichlorosilane comprenant :
la réalisation d'une réaction de conversion par introduction de tétrachlorure de silicium et d'hydrogène dans une chambre de réaction, et la production d'un gaz de produit de réaction contenant du trichlorosilane et du chlorure d'hydrogène par une réaction de conversion à 900 °C à 1900 °C ;
la réalisation d'un refroidissement du gaz de produit de réaction refoulé de la chambre de réaction par trempe à 300 °C à 800 °C ; et
la réalisation d'un préchauffage du tétrachlorure de silicium et de l'hydrogène à 300 °C à 800 °C par échange de chaleur entre le gaz de produit de réaction qui est maintenu à pas moins de 300 °C après la trempe et le tétrachlorure de silicium et l'hydrogène à introduire dans la chambre de réaction.

2. Procédé de production de trichlorosilane selon la revendication 1, dans lequel le gaz de produit de réaction est produit par une réaction de conversion à 1200 °C à 1900 °C dans la réaction de conversion.

3. Procédé de production de trichlorosilane selon la revendication 1, dans lequel le gaz de produit de réaction est trempé à 300 °C à 650 °C au cours du refroidissement.
